# EUROPEAN PATENT SPECIFICATION

(11) **EP 3 547 190 B1**
(45) Date of publication and mention of the grant of the patent: **23.12.2020**
(21) Application number: 17893204.2
(22) Date of filing: 19.01.2017
(51) Int. Cl.: G06F 21/55, H04L 29/06, G06F 21/56

(54) **ATTACK DETECTION DEVICE, ATTACK DETECTION METHOD, AND ATTACK DETECTION PROGRAM**
ANGRIFFSDETEKTIONSVORRICHTUNG, ANGRIFFSDETEKTIONSVERFAHREN UND ANGRIFFSDETEKTIONSPROGRAMM
DISPOSITIF DE DÉTECTION D'ATTAQUE, PROCÉDÉ DE DÉTECTION D'ATTAQUE ET PROGRAMME DE DÉTECTION D'ATTAQUE

(43) Date of publication of application: 02.10.2019
(73) Proprietor: Mitsubishi Electric Corporation, Chiyoda-ku Tokyo 100-8310 (JP)
(72) Inventor: NAKAI, Tsunato, Tokyo 100-8310 (JP); YAMAGUCHI, Teruyoshi, Tokyo 100-8310 (JP); SHIMIZU, Koichi, Tokyo 100-8310 (JP); KOBAYASHI, Nobuhiro, Tokyo 100-8310 (JP)
(74) Representative: Pfenning, Meinig & Partner mbB
(86) International application number: PCT/JP2017/001690
(87) International publication number: WO 2018/134939

(56) References cited:
- WO-A1-2016/113911
- WO-A1-2016/114077
- US-A1- 2016 085 237
- US-A1- 2016 094 578
- YANG Y ET AL: "Stateful intrusion detection for IEC 60870-5-104 SCADA security", 2014 IEEE PES GENERAL MEETING | CONFERENCE & EXPOSITION, IEEE, 27 July 2014 (2014-07-27), pages 1-5, XP032670220, DOI: 10.1109/PESGM.2014.6939218 [retrieved on 2014-10-29]
- TSUNATO NAKAI: "Plant Seigyo System Muke White List-gata Kogeki Kenchi Kino no Sekke", SCIS2016 2016 SYMPOSIUM ON CRYPTOGRAPHY, 19 January 2016 (2016-01-19), pages 1-8, XP009515157,
- KOICHI SHIMIZU: "White List-gata Kogeki Kenchi ni Okeru Kenchi Rule no Jido Seisei", SCIS2016 2016 SYMPOSIUM ON CRYPTOGRAPHY AND INFORMATION SECURITY, 19 January 2016 (2016-01-19), pages 1-7, XP009515156,

## Description

### Technical Field

The present invention relates to an attack detection device, an attack detection method, and an attack detection program.

### Background Art

In recent years, with an increase in the number of cases in which a control system is connected to a network, the number of cases in which the control system becomes a target of cyber attacks increases. In order to detect intrusions and attacks on the network by cyber attacks, an intrusion attack detection system is used in the control system.

Utilizing the fact that a network communication of the control system is fixed, a conventional intruder attack detection system defines a white list describing permitted communications, such as pairs of a destination address, or a source address or protocols. In addition, intrusion attack detection systems focusing on a system state have been developed as countermeasures against attacks by combination of normal communications, or attacks by illegal operations by operators.

Patent Literature 1 discloses a technique of detecting intrusions and attacks by using a packet notifying a system state, to determine whether or not it is a normal communication pattern corresponding to the system state.

Patent Literature 2 relates to a data determination device, a data determination method, and a program for detecting an attack intrusion into a network. According to Patent Literature 2, a state transition model storage unit stores a state transition model that represents a state transition between operation states of a plurality of operation states. Data for which communication is permitted in each operating state is stored as a communication permission list.

Patent Literature 3 relates to a supervisory control and data acquisition (SCADA) system. The SCADA system includes a network interface configured to communicate data with a plurality of industrial control devices via an industrial control system (ICS) network. The SCADA system further includes a memory storing SCADA configuration information including ICS network configuration information and device information descriptive of each industrial control device of the plurality of industrial control devices and at least one processor in data communication with the memory and the network interface. The SCADA system also includes an intrusion detection component executable by the at least one processor and configured to read the SCADA configuration information, generate, from the SCADA configuration information, authorized communication information descriptive of one or more expected communication types of communications authorized for transmission via the ICS network..

Patent Literature 4 aims to detect abnormality in a control network in which a normal pattern of communication changes in accordance with the state of a control system. A normal pattern of communication between devices is stored for each state, information indicating the system state is acquired to determine the system state, and information indicating the pattern of communication between devices is acquired to determine the pattern of communication. Then, by determining, on the basis of the determined pattern of communication and the pattern of communication stored as a normal pattern of communication in the determined system state, whether system abnormality has occurred, it is possible to enhance the availability and reliability of the control network.

### Citation List

### Patent Literature

Patent Literature 1: WO 2014/155650 A
Patent Literature 2: JP 6 054010 B2
Patent Literature 3: US 2016/094578 A1
Patent Literature 4: US 2016/085237 A1

### Summary of Invention

### Technical Problem

The intrusion attack detection system of Patent Literature 1 grasps a system state by a status notification packet transmitted from a server device or a controller, and determines whether or not it is a communication pattern according to the state. In this intrusion attack detection system of Patent Literature 1, it is necessary to incorporate a function of transmitting the status notification packet to the server device or the controller. Therefore, there has been a problem that it is necessary to add a function and renovate existing facilities.

An attack detection device according to the present invention estimates a system state from communication data, and realizes attack detection by using the estimated system state and a white list. Thus, since the attack detection device according to the present invention estimates a system state from communication data, it is not necessary to incorporate a status notification function in a facility, and it is possible to easily introduce into the facility.

### Solution to Problem

An attack detection device to detect an attack on a control system that transitions in a plurality of system states, the control system including equipment and a server device to control the equipment, according to the present invention, includes:
a white list storage unit to correlate and store, for each system state of the plurality of system states, a white list defining system information that belongs to the control system and is permitted in the system state;
a state estimation unit to acquire communication data communicated between the server device and the equipment, and estimate a current system state of the control system based on the acquired communication data; and
an attack determination unit to acquire a white list corresponding to the current system state from the white list storage unit, and determine whether or not the attack has been detected based on the acquired white list and system information belonging to the control system in the current system state.

### Advantageous Effects of Invention

In the attack detection device according to the present invention, a white list storage unit correlates and stores, for each system state of a plurality of system states, a white list defining system information that belongs to a control system and is permitted in the system state. A state estimation unit acquires communication data communicated between a server device and equipment, and estimates a current system state of the control system on the basis of the acquired communication data. An attack determination unit acquires a white list corresponding to the current system state from the white list storage unit, and determines whether or not an attack has been detected, on the basis of the acquired white list and system information belonging to the control system in the current system state. Therefore, according to the attack detection device according to the present invention, since a system state can be estimated from the communication data, and an attack can be detected with use of the estimated system state, it is possible to easily introduce into the facility.

### Brief Description of Drawings

Fig. 1 is a diagram illustrating a system configuration example 100 of a control system.
Fig. 2 is a configuration diagram of a control system 700 and an attack detection device 200 according to a first embodiment.
Fig. 3 is a configuration diagram of a state storage unit 241 according to the first embodiment.
Fig. 4 is a configuration diagram of a white list storage unit 242 according to the first embodiment.
Fig. 5 is a flowchart illustrating an attack detection process S100 of an attack detection method 510 and an attack detection program 520 of the attack detection device 200 according to the first embodiment.
Fig. 6 is a flowchart illustrating an attack determination process S10 according to the first embodiment.
Fig. 7 is a flowchart illustrating a state estimation process S30 according to the first embodiment.
Fig. 8 is a diagram illustrating a specific operation of the attack detection device 200 according to the first embodiment.
Fig. 9 is a configuration diagram of an attack detection device 200 according to a modified example of the first embodiment.

### Description of Embodiments

Hereinafter, an embodiment of the present invention will be described with reference to the drawings. It should be noted that, in the individual drawings, the same or corresponding parts are denoted by the same reference numerals. In the description of the embodiment, the same or corresponding parts will be omitted or simplified as necessary.

### First Embodiment

### *** Description of Configuration ***

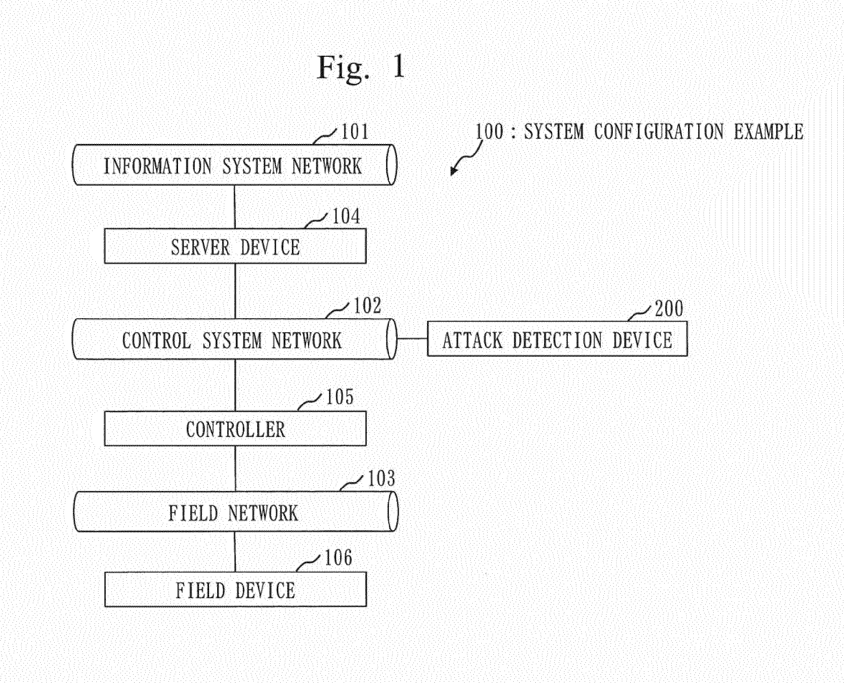

With reference to Fig. 1, a system configuration example 100 of a control system will be described.

In the system configuration example 100 of Fig. 1, the control system includes an information system network 101, a control system network 102, a field network 103, a server device 104, a controller 105, a field device 106, and an attack detection device 200.

The information system network 101 is a network used in an office, and is connected with the server device 104.

The control system network 102 is a network through which an operation amount transmitted from the server device 104 to the controller 105 and an observation amount transmitted from the controller 105 to the server device 104 flow.

The field network 103 is a network through which a control signal and sensor information flow from the controller 105 to the field device 106.

In the system configuration example 100 of Fig. 1, the attack detection device 200 is connected to the control system network 102. Note that the system configuration example 100 in Fig. 1 is a general configuration of the control system, and the control system need not have all the configurations illustrated in Fig. 1. Even in a case where the control system has a part of the configuration illustrated in Fig. 1, the present embodiment can be applied to the control system. Further, the attack detection device 200 may be connected to the field network 103 other than the control system network 102.

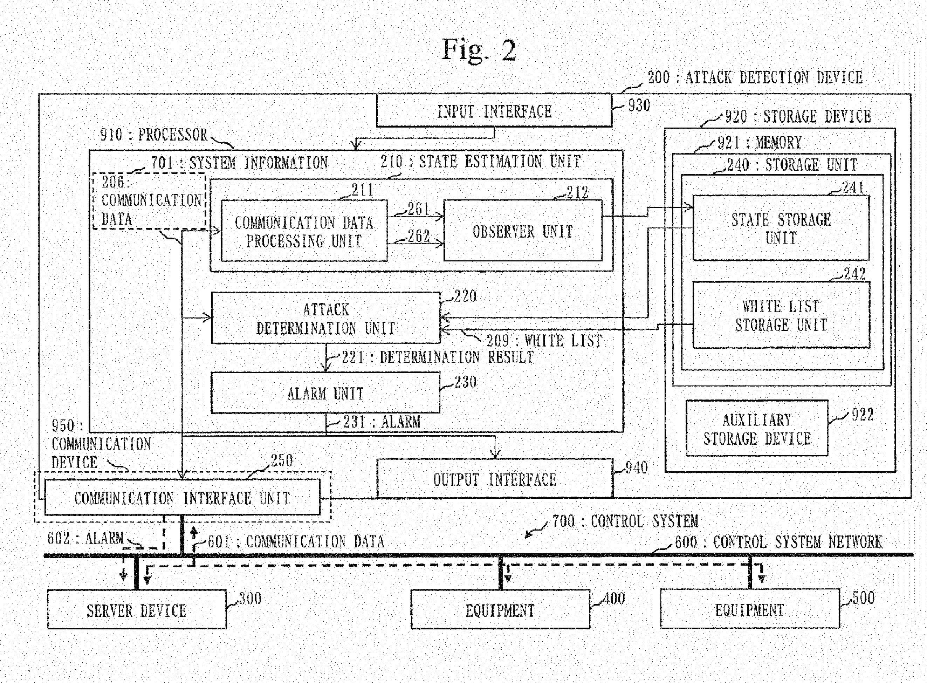

With reference to Fig. 2, a configuration of a control system 700 and the attack detection device 200 according to the present embodiment will be described.

The control system 700 includes the attack detection device 200, a server device 300, equipment 400, and equipment 500. The attack detection device 200, the server device 300, the equipment 400, and the equipment 500 are connected to a control system network 600.

The control system 700 has the equipment 400 and 500, and the server device 300 to control the equipment 400 and 500. In addition, the control system 700 transitions in a plurality of system states. Specifically, the equipment is a controller.

The attack detection device 200 is connected to the control system network 600 and collects communication data 601 transmitted and received between the server device 300, and the equipment 400 and the equipment 500. The attack detection device 200 estimates a current control state of the control system 700 from communication data 206, with the collected communication data 601 as the communication data 206. The communication data 601 received by a communication interface unit 250 is represented as the communication data 206. Further, in the following, a current control state of the control system 700 is also referred to as a system state or simply a state.

In addition, the attack detection device 200 collates the collected communication data 206 with a white list 209, and detects an attack on the control system 700. The attack detection device 200 is also referred to as an intrusion attack detection device. An action performed by the attack detection device 200 is an example of the attack detection method 510.

The equipment 400 and the equipment 500 are equipment to be monitored by the attack detection device 200. Specifically, each of the equipment 400 and the equipment 500 is a controller. Each of the equipment 400 and the equipment 500 transmits and receives the communication data 601 between with the server device 300.

Note that, in a case where it is unnecessary to distinguish between the equipment 400 and the equipment 500, it is simply represented as equipment or a controller.

The server device 300 manages the equipment 400 and the equipment 500.

As illustrated in Fig. 2, the attack detection device 200 is a computer.

The attack detection device 200 includes hardware such as a processor 910, a storage device 920, an input interface 930, an output interface 940, and a communication device 950. The storage device 920 includes a memory 921 and an auxiliary storage device 922.

The attack detection device 200 includes a state estimation unit 210, an attack determination unit 220, an alarm unit 230, a storage unit 240, and the communication interface unit 250 as a functional configuration. The state estimation unit 210 has a communication data processing unit 211 and an observer unit 212. The storage unit 240 has a state storage unit 241 and a white list storage unit 242.

Functions of the communication data processing unit 211, the observer unit 212, the attack determination unit 220, and the alarm unit 230 are realized by software.

The storage unit 240 is realized by the memory 921. Further, the storage unit 240 may be realized by only the auxiliary storage device 922, or by the memory 921 and the auxiliary storage device 922. The storage unit 240 may be realized by any method.

The communication interface unit 250 is realized by the communication device 950.

The processor 910 is connected to other pieces hardware via a signal line, and controls these other pieces of hardware. The processor 910 is an integrated circuit (IC) that performs arithmetic processing. The processor 910 is a central processing unit (CPU) or a micro-processing unit (MPU).

Specifically, the auxiliary storage device 922 is a read only memory (ROM), a flash memory, or a hard disk drive (HDD). Specifically, the memory 921 is a random access memory (RAM).

The input interface 930 is a port connected to input devices such as a mouse, a keyboard, and a touch panel. Specifically, the input interface 930 is a universal serial bus (USB) terminal. Note that the input interface 930 may be a port connected to a local area network (LAN).

The output interface 940 is a port to be connected with a cable of a display device such as a display. Specifically, the output interface 940 is a USB terminal or a high-definition multimedia interface (HDMI) (registered trademark) terminal. Specifically, the display is a liquid crystal display (LCD).

The communication device 950 communicates with the server device 300, the equipment 400, and the equipment 500 via the control system network 600. The communication device 950 has a receiver and a transmitter. Specifically, the communication device 950 is a communication chip or a network interface card (NIC). The communication device 950 is a communication unit that communicates data. The receiver is a reception unit that receives data. The transmitter is a transmission unit that transmits data.

The auxiliary storage device 922 stores a program for realizing functions of the communication data processing unit 211, the observer unit 212, the attack determination unit 220, and the alarm unit 230. The program for realizing functions of the communication data processing unit 211, the observer unit 212, the attack determination unit 220, and the alarm unit 230 is also referred to as an attack detection program 520. This program is loaded into the memory 921, read by the processor 910, and executed by the processor 910. Further, the auxiliary storage device 922 also stores an OS. At least a part of the OS is loaded into the memory 921. The processor 910 executes the attack detection program 520 while executing the OS. Fig. 2 schematically illustrates a state in which the processor 910 is executing a program for realizing functions of the communication data processing unit 211, the observer unit 212, the attack determination unit 220, and the alarm unit 230.

The attack detection device 200 may include only one processor 910 or may include a plurality of processors 910. The plurality of processors 910 may cooperatively execute a program for realizing functions of the communication data processing unit 211, the observer unit 212, the attack determination unit 220, and the alarm unit 230.

Information, data, signal values, and variable values indicating results of processing by the communication data processing unit 211, the observer unit 212, the attack determination unit 220, and the alarm unit 230 are stored in the auxiliary storage device 922, the memory 921, or a register or a cache memory in the processor 910 of the attack detection device 200.

The program for realizing functions of the communication data processing unit 211, the observer unit 212, the attack determination unit 220, and the alarm unit 230 may be stored in a portable recording medium. Specifically, the portable recording medium is a magnetic disk, a flexible disk, an optical disk, a compact disk, a Blu-ray (registered trademark) disk, and a digital versatile disc (DVD).

Note that an attack detection program product is a storage medium and a storage device in which the attack detection program 520 is recorded. The attack detection program product refers to what is loaded with a computer readable program, regardless of appearance.

### *** Description of Functional Configuration ***

Hereinafter, functions of the communication interface unit 250, the state estimation unit 210, the attack determination unit 220, the alarm unit 230, and the white list storage unit 242 illustrated in Fig. 2 will be described.

The communication interface unit 250 receives the communication data 601 transmitted and received by the server device 300, the equipment 400, and the equipment 500 via the control system network 600. Then, the communication interface unit 250 outputs the received communication data 601 as the communication data 206, to the state estimation unit 210 and the attack determination unit 220.

Further, the communication interface unit 250 receives an alarm 231 from the alarm unit 230, and transmits the received alarm 231 to the server device 300 as an alarm 602.

Thus, the communication interface unit 250 transmits and receives data between internal elements of the attack detection device 200 and the control system network 600.

The state estimation unit 210 acquires the communication data 601 communicated between the server device 300 and the equipment 400 and the equipment 500, and estimates a current system state of the control system 700 on the basis of the acquired communication data 601. The state estimation unit 210 acquires the communication data 206 from the communication interface unit 250. The state estimation unit 210 analyzes the acquired communication data 206 and estimates the current system state of the control system 700. The state estimation unit 210 stores system state information 207 including the estimated system state, in the state storage unit 241. Note that the state estimation unit 210 may directly output the system state information 207 to the attack determination unit 220.

Meanwhile, the communication data 206 is an example of system information 701 belonging to the control system 700.

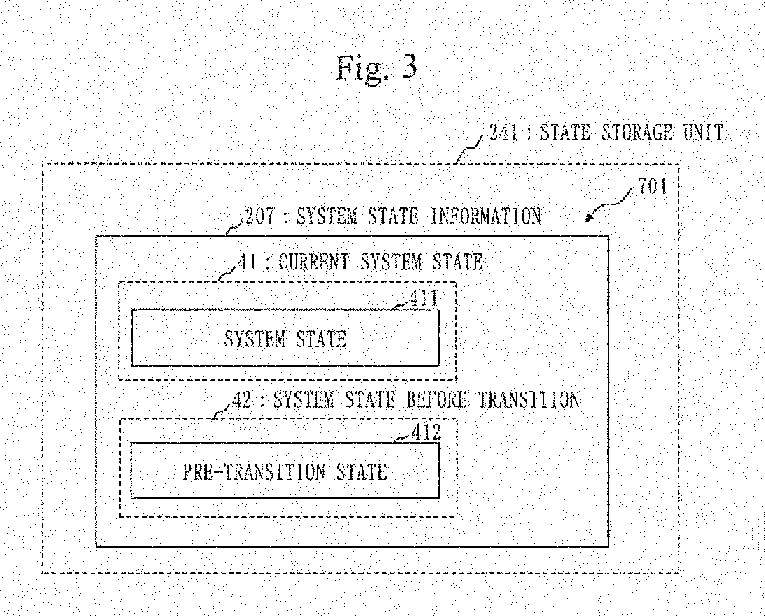

Fig. 3 is a diagram illustrating a configuration of the state storage unit 241 according to the present embodiment.

The state storage unit 241 stores a current system state 41 and a system state 42 before transitioning to the current system state. The state storage unit 241 stores a system state 411 and a pre-transition state 412, as the system state information 207. The system state 411 is an example of the current system state 41. The pre-transition state 412 is an example of the system state 42 before transitioning to the current system state 41. State transition of the control system 700 included in the system state information 207 is an example of the system information 701 belonging to the control system 700.

The state estimation unit 210 stores a currently estimated system state in the system state 411 of the state storage unit 241, and stores a previously estimated system state in the pre-transition state 412 of the state storage unit 241.

The white list storage unit 242 correlates and stores, for each system state of a plurality of system states, a white list defining system information that belongs to the control system and is permitted in the system state. The white list storage unit 242 holds a plurality of white lists 209 correlated with the system state. The white list 209 is a preset rule for permitting normal communication. As the white list 209, a state transition white list 901 and a communication data white list 902 are conceivable.

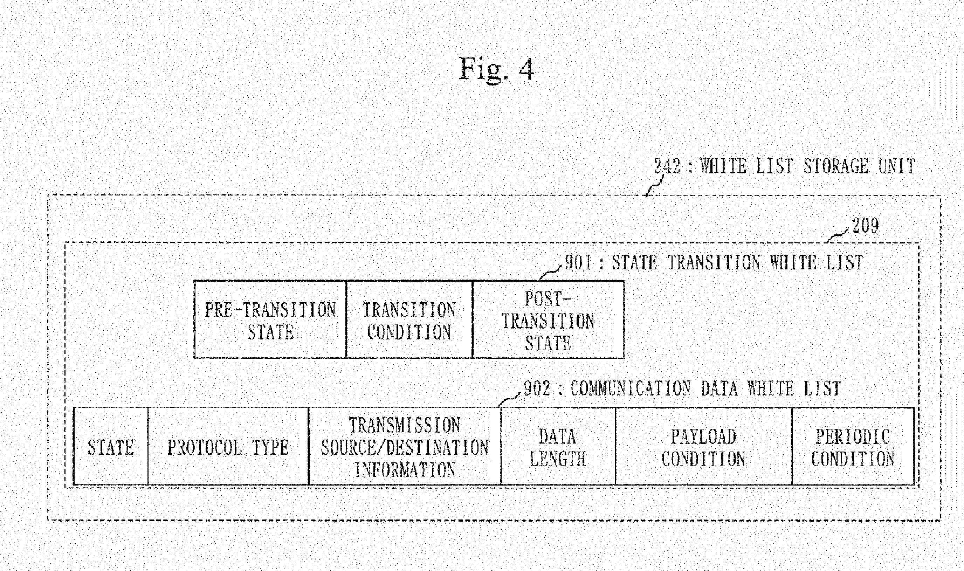

Fig. 4 is a diagram illustrating a configuration of the white list storage unit 242 according to the present embodiment.

The white list storage unit 242 correlates and stores as the white list 209, for each system state of a plurality of system states, the communication data white list 902 that defines, as the system information 701, communication data permitted in the system state.

In addition, the white list storage unit 242 correlates and stores as the white list 209, for each system state of a plurality of system states, the state transition white list 901 that defines, as the system information 701, a pre-transition state permitted as a system state before transitioning to the system state.

The state transition white list 901 is a white list that defines a transition of a normal system state. The state transition white list 901 is defined by a pre-transition state, a transition condition defining a condition such as a command to be a trigger of a transition, and a post-transition state. The state transition white list 901 is used to determine whether or not the transition of the system state is due to an attack.

The communication data white list 902 is a white list that defines normal communication data for each system state. The communication data white list 902 is defined, for each system state, by a protocol type, transmission source information and destination information such as an IP address or a port number, a data length, a payload condition such as a command or a range of or a set value, and a periodic condition such as occurrence of communication in a fixed cycle. The communication data white list 902 is used for determining whether or not the communication data is due to an attack.

On the basis of the system state information 207 estimated by the state estimation unit 210, the attack determination unit 220 acquires the white list 209 according to the current system state, from the white list storage unit 242.

The attack determination unit 220 acquires the white list 209 corresponding to the current system state 41 from the white list storage unit 242, and determines whether or not an attack has been detected, on the basis of the acquired white list 209 and the system information 701 belonging to the control system 700 in the current system state 41. Specifically, the system information 701 is the communication data 206 or a state transition of the control system 700 included in the system state information 207.

The attack determination unit 220 acquires the system state information 207 from the storage unit 240. Alternatively, the attack determination unit 220 may directly acquire the system state information 207 from the state estimation unit 210. Then, the attack determination unit 220 selects the white list 209 correlated with the system state 411 indicated in the system state information 207, from the white list storage unit 242. That is, the attack determination unit 220 selects the white list 209 correlated with the system state 411 estimated by the state estimation unit 210. Then, using the selected white list 209, the attack determination unit 220 detects an attack on the control system 700.

More specifically, the attack determination unit 220 acquires the communication data 206 from the communication interface unit 250, and applies the selected white list 209 to the acquired communication data 206. Then, the attack determination unit 220 determines whether or not the communication data 206 is communication data permitted in the current system state. The attack determination unit 220 determines that the communication data 206 does not match the white list 209 unless all the attributes of the communication data 206 match all the items of the white list 209. If the communication data 206 does not match the white list 209, the attack determination unit 220 outputs a determination result 221 indicating the presence of an attack, to the alarm unit 230.

When it is determined that the attack has been detected by the attack determination unit 220, the alarm unit 230 transmits the alarm 231 to the server device 300. Specifically, when acquiring the determination result 221 from the attack determination unit 220, the alarm unit 230 transmits the alarm 231 to the server device 300.

The server device 300 presents the alarm 602 from the alarm unit 230 to an operator. The server device 300 may display the alarm 602 on the display, or may present the alarm 602 by using a display instrument such as a lamp. Further, the server device 300 may present the alarm 602 to an operator by sound. Further, the server device 300 may transmit the alarm 602 to another server device.

### *** Description of Operation ***

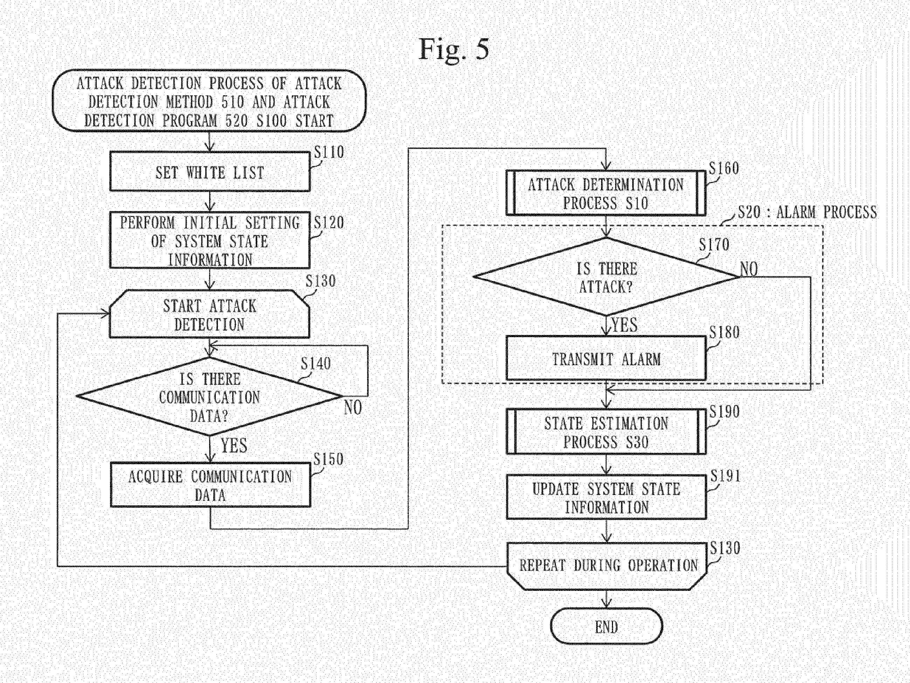

Fig. 5 is a flowchart illustrating the attack detection process S100 of an attack detection method 510 and the attack detection program 520 of the attack detection device 200 according to the present embodiment. The attack detection program 520 causes the attack detection device 200, which is a computer, to execute the following processes.

Meanwhile, the operation flow of the attack detection device 200 in Fig. 5 is an example, and the operation flow of the attack detection device 200 does not necessarily be as illustrated in Fig. 5.

In step S110, when the attack detection device 200 is activated, the attack detection device 200 sets the white list 209 in the white list storage unit 242.

In step S120, the attack detection device 200 performs initial setting of the system state information 207. As an initial state of the system state information 207, the attack detection device 200 uses, for example, a system state described in the white list.

In step S130, while equipment as a target of attack detection such as the server device 300, the equipment 400, and the equipment 500 is operating, the processing from step S140 to step S191 is repeated.

In step S140, the attack determination unit 220 checks the presence or absence of the communication data 206 from the communication interface unit 250. When there is no communication data 206, the attack determination unit 220 continues to check the presence or absence of the communication data 206. When there is the communication data 206, the process proceeds to step S150.

In step S150, the attack determination unit 220 acquires the communication data 206.

### <Attack determination process S10>

In step S160, the attack determination unit 220 executes an attack determination process S10.

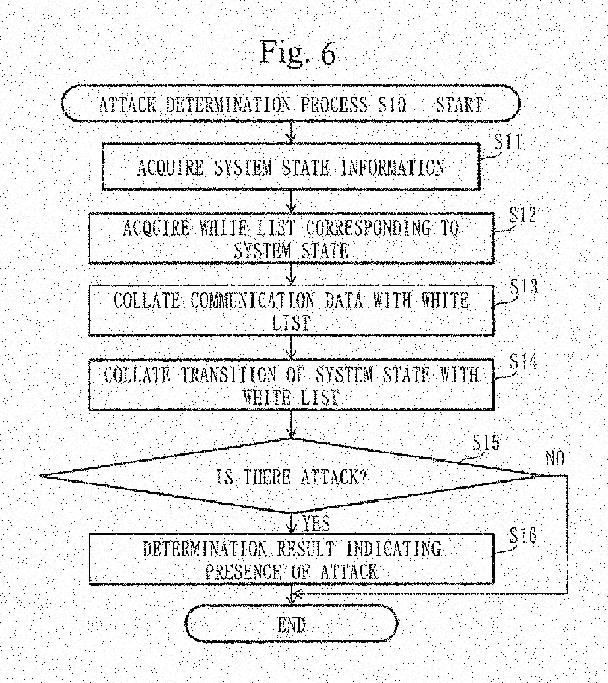

The attack determination process S10 according to the present embodiment will be described with reference to Fig. 6.

In step S11, the attack determination unit 220 acquires the system state information 207 from the state storage unit 241. In the system state information 207, the system state 411 is set as the current system state 41.

In step S12, the attack determination unit 220 acquires the white list 209 correlated with the current system state 41 indicated in the system state information 207, from the white list storage unit 242. Specifically, the attack determination unit 220 acquires the communication data white list 902 corresponding to the current system state 41, from the white list storage unit 242. Further, the attack determination unit 220 acquires the state transition white list 901 corresponding to the current system state 41, from the white list storage unit 242.

In step S13, the attack determination unit 220 collates the communication data 206 with the white list 209. The attack determination unit 220 collates the communication data 206 acquired from the communication interface unit 250 with the white list 209 acquired from the white list storage unit 242. Specifically, the attack determination unit 220 collates the acquired communication data white list 902 with the communication data 206 acquired by the state estimation unit 210.

In step S14, the attack determination unit 220 collates the transition of the system state indicated in the system state information 207 with the white list 209 acquired from the white list storage unit 242. Specifically, the attack determination unit 220 collates the acquired state transition white list 901 with the pre-transition state 412, which is the system state 42 before transitioning to the current system state 41.

In step S15, the attack determination unit 220 determines whether or not there is an attack. When the communication data 206 acquired by the state estimation unit 210 does not match the acquired communication data white list 902, the attack determination unit 220 determines that an attack has been detected. In addition, when the pre-transition state 412 before transitioning to the current system state 411 does not match the acquired state transition white list 901, the attack determination unit 220 determines that an attack has been detected. Specifically, when the communication data 206 matches the white list 209 and the transition of the current system state matches the white list 209, the attack determination unit 220 determines that there is no attack. If the communication data 206 does not match the white list 209 or if the transition of the current system state does not match the white list 209, the attack determination unit 220 determines that there is an attack. When it is determined that there is an attack, the process proceeds to step S16.

In step S16, the attack determination unit 220 outputs the determination result 221 notifying an occurrence of abnormality, to the alarm unit 230. When it is determined that there is no attack, the attack determination unit 220 does not perform the processing of step S16.

Next, returning to Fig. 5, the description will be continued.

### <Alarm process S20>

In step S170, the alarm unit 230 determines whether or not there is an attack. Specifically, when receiving the determination result 221 from the attack determination unit 220, the alarm unit 230 determines that there is an attack. When it is determined that there is an attack, the process proceeds to step S180. When it is determined that there is no attack, the process proceeds to step S190.

In step S180. the alarm unit 230 acquires the determination result 221 from the attack determination unit 220, and transmits the alarm 231 to the communication interface unit 250. The communication interface unit 250 transmits the alarm 231 as the alarm 602 to the server device 300.

### <State estimation process S30>

In step S190, the state estimation unit 210 executes a state estimation process S30 for estimating a system state from the communication data 206. In the state estimation process S30, the state estimation unit 210 estimates a current system state by a state observation device based on a control theory. The state estimation unit 210 acquires the communication data 601 communicated between the server device 300 and the equipment 400 and 500. The state estimation unit 210 classifies the acquired communication data 601 into an operation amount 261 transmitted from the server device 300 to the equipment 400 and 500, and an observation amount 262 transmitted from the equipment 400 and 500 to the server device 300. The state estimation unit 210 estimates a current system state by the state observation device with use of the operation amount 261 and the observation amount 262.

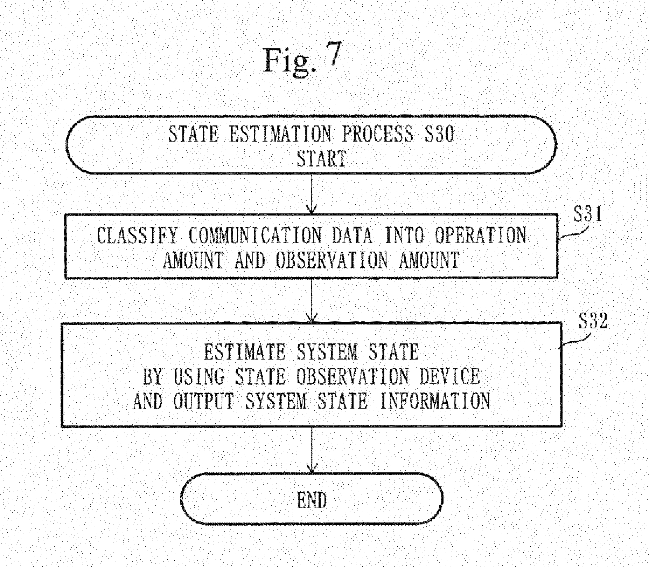

With reference to Fig. 7, the state estimation process S30 according to the present embodiment will be described.

In step S31, the communication data processing unit 211 classifies the communication data 206 into the operation amount 261 and the observation amount 262. The operation amount 261 is communication data from the server device 300 to the equipment 400 or the equipment 500. The observation amount 262 is communication data from the equipment 400 or the equipment 500 to the server device 300.

In step S32, the observer unit 212 estimates a current system state by using the state observation device on the basis of the control theory, with the operation amount 261 and the observation amount 262 as inputs. The observer unit 212 is also referred to as a state observer unit. The observer unit 212 outputs the estimation result as a system state. A design of the observer is realized by modeling the system, and a method such as a finite automaton or Petri net can be considered as a modeling method.

In step S191, the observer unit 212 updates the system state 411 of the system state information 207 stored in the state storage unit 241, to the system state estimated in the state estimation process S30. Further, the observer unit 212 updates the pre-transition state 412 of the system state information 207, to the system state before transitioning to the current system state.

When updating of the system state information 207 is completed with the processing from step S190 to step S191, and the equipment to be detected is operating, the process returns to step S130. When the equipment to be detected has finished its operation, the attack detection device 200 stops its operation.

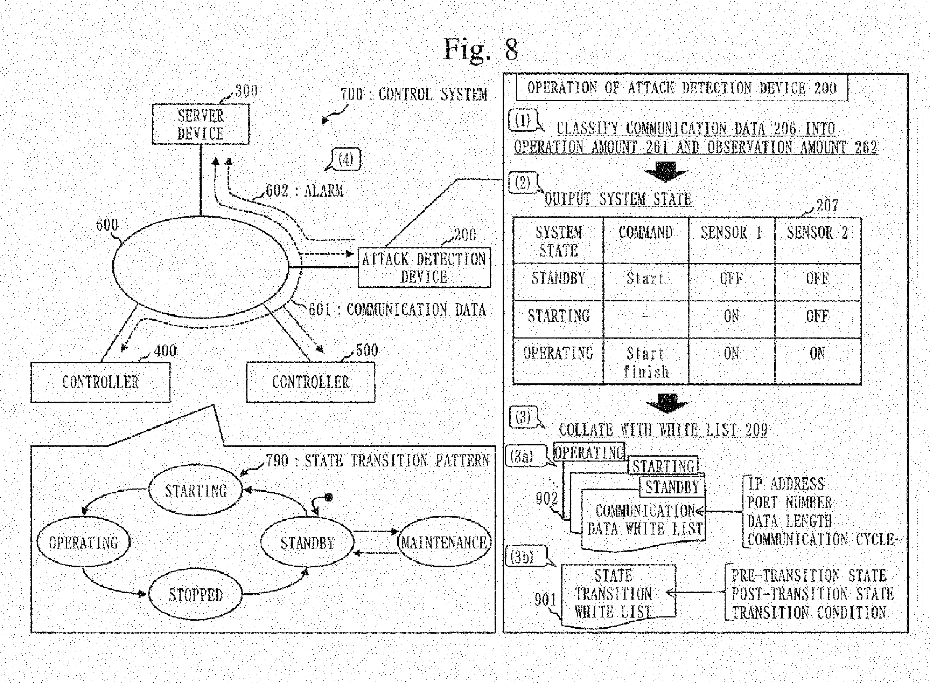

Next, a specific operation of the attack detection device 200 according to the present embodiment will be described with reference to Fig. 8.

In the control system 700, state transitions such as "standby" → "starting" → "operating" → "stopped" → "standby" ↔ "maintenance" are performed as in a state transition pattern 790.

The attack detection device 200 collects the communication data 601, estimates the system state, and makes an attack determination by the white list 209 according to the estimated system state.
(1) The communication data 206 collected by the attack detection device 200 includes the operation amount 261 transmitted from the server device 300 to the equipment 400 or 500, and the observation amount 262 transmitted from the equipment 400 or 500 to the server device 300. The state estimation unit 210 classifies the communication data 206 into the operation amount 261 and the observation amount 262.
(2) The state estimation unit 210 estimates a system state from the operation amount 261 and the observation amount 262 included in the communication data 206. For example, when a Start command is issued and it is informed that a value of a sensor 1 is OFF and a value of a sensor 2 is OFF, the system state is estimated to be "standby". Further, when the Start command and a Finish command are issued and it is informed that a value of the sensor 1 is ON and a value of the sensor 2 is ON, the system state is estimated to be "operating". When the system state is estimated to be "operating", the system state 411 of the system state information 207 is set such that the system state is operating, the command is the Start command and the finish command, the value of the sensor 1 is ON, and the value of the sensor 2 is ON. Further, the pre-transition state 412 of the system state information 207 is set such that the system state is starting, there is no command, the value of the sensor 1 is ON, and the value of the sensor 2 is OFF.
   As illustrated in the system state information 207 of Fig. 8, the system state estimated by the state estimation unit 210 may be accumulated. In addition, it is assumed that a command that has been a trigger for transition to the system state is set in each of the accumulated system states.
(3) The attack determination unit 220 determines whether it is normal communication data 206 and it is normal state transition, by the white list 209 corresponding to the estimated system state. As described above, as the white list 209, there are the state transition white list 901 and the communication data white list 902.
   (3a) The communication data white list 902 defines communication data to be permitted for each system state. Specifically, communication data permitted in the system state "standby" is defined by attribute information such as an IP address, a port number, a data length, and a communication cycle. The attack determination unit 220 switches the communication data white list 902 to be referred to, in accordance with the current system state estimated by the state estimation unit 210.
   (3b) As a specific example, the state transition white list 901 permits the transition of the system state from "standby" to "starting", and conversely, determines undefined state transition from "operating" to "maintenance" as abnormal. Further, abnormal state transition may be determined by the state estimation unit 210.

   The attack determination unit 220 sets the system state before transitioning in the system state information 207 as the pre-transition state, and sets the current system state as the post-transition state. In addition, the attack determination unit 220 sets a command indicated in the current system state as a transition condition. The attack determination unit 220 collates these pre-transition state, post-transition state, and a transition condition with the state transition white list 901 acquired from the white list storage unit 242.
(4) The attack determination unit 220 outputs the determination result 221 to the alarm unit 230. The alarm unit 230 transmits the alarm 602 to the server device 300 on the basis of the determination result 221. Further, the alarm unit 230 may transmit not only the alarm 602 but also a control signal for the purpose of fail safe, to the server device 300.

### *** Other Configuration ***

In the present embodiment, functions of the communication data processing unit 211, the observer unit 212, the attack determination unit 220, and the alarm unit 230 are realized by software. However, as a modified example, the functions of the communication data processing unit 211, the observer unit 212, the attack determination unit 220, and the alarm unit 230 may be realized by hardware.

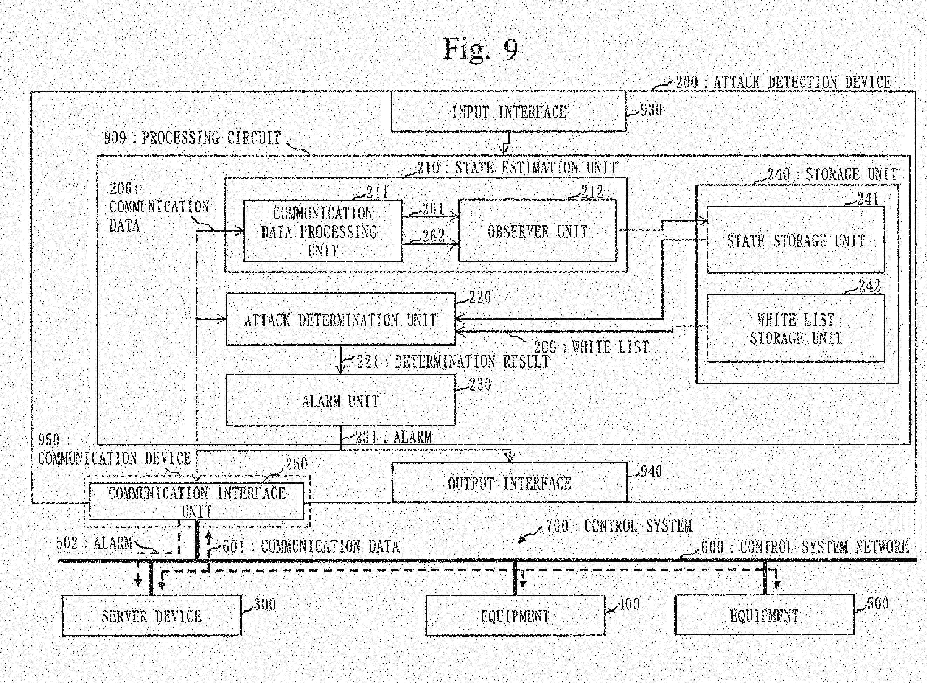

With reference to Fig. 9, a configuration of the attack detection device 200 according to a modified example of the present embodiment will be described.

As illustrated in Fig. 9, the attack detection device 200 includes hardware such as a processing circuit 909, the input interface 930, the output interface 940, and the communication device 950.

The processing circuit 909 is a dedicated electronic circuit for realizing functions of the communication data processing unit 211, the observer unit 212, the attack determination unit 220, and the alarm unit 230 described above, and the storage unit 240. Specifically, the processing circuit 909 is a single circuit, a composite circuit, a programmed processor, a parallel-programmed processor, a logic IC, a GA, an ASIC, or an FPGA. GA is an abbreviation for gate array. ASIC is an abbreviation for application specific integrated circuit. FPGA is an abbreviation for field-programmable gate array.

The functions of the communication data processing unit 211, the observer unit 212, the attack determination unit 220, and the alarm unit 230 may be realized by one processing circuit 909 or may be dispersed and realized by a plurality of processing circuits 909.

As another modified example, the function of the attack detection device 200 may be realized by a combination of software and hardware. That is, some function of the attack detection device 200 may be realized by dedicated hardware, and the remaining function may be realized by software.

The processor 910, the storage device 920, and the processing circuit 909 of the attack detection device 200 are collectively referred to as "processing circuitry". That is, even in a case where the configuration of the attack detection device 200 is a configuration illustrated in any of Figs. 2 and 9, the functions of the communication data processing unit 211, the observer unit 212, the attack determination unit 220, and the alarm unit 230, and the storage unit 240 are realized by the processing circuitry.

The "unit" may be replaced with "step", "procedure", or "processing". Further, a function of "unit" may be realized by firmware.

### *** Description of Effect of Embodiment ***

In the attack detection device 200 according to the present embodiment, a system state is estimated from the communication data by the state observation device based on the control theory, and attack detection is performed with a white list according to the estimated system state. As described above, according to the attack detection device 200 according to the present embodiment, since the system state is estimated from the communication data, it is not necessary to renovate for incorporating a state notification function in a facility, and it is possible to easily introduce even into an existing facility.

Further, in the attack detection device 200 according to the present embodiment, the system state is estimated from the communication data. Then, the attack detection device 200 according to the present embodiment detects an attack on the communication system by using the white list prepared for each estimated system state. Therefore, according to the present embodiment, by merely connecting the attack detection device 200 to the network, it is possible to detect an attack causing an abnormal operation by combining communication determined to be normal in the white list on a controller basis. At this time, in the present embodiment, there is no need to renovate monitoring target equipment such as equipment that is a server device and controller.

The attack detection device 200 according to the present embodiment is a network type intrusion and attack detection device that monitors all communication of the monitoring target equipment included in the communication system. Therefore, according to the present embodiment, there is no need for cost of renovation for incorporating a detection function in the monitoring target equipment.

The attack detection device 200 according to the present embodiment detects an attack by switching the white list in accordance with the system state. Therefore, the attack detection device 200 according to the present embodiment does not perform parallel detection processing for each monitoring target equipment. Further, the attack detection device 200 according to the present embodiment detects an attack with the minimum necessary white list. Therefore, the attack detection device 200 according to the present embodiment does not require high-performance computation resources and enormous white lists.

Further, even when an attack involving communication according to a communication sequence is performed from a computer taken over by an attacker, the attack detection device 200 according to the present embodiment can detect the attack by estimating the system state and applying the white list corresponding to the system state, to the communication data.

According to the attack detection device 200 according to the present embodiment, attacks via a control system network or a maintenance network can be detected even in a case of an attack from a terminal other than a remote terminal, or a control monitoring device or a maintenance terminal.

The attack detection device 200 according to the present embodiment defines the system state by estimating the state from the communication data rather than using a packet for notifying the state. Therefore, the attack detection device 200 according to the present embodiment is a countermeasure for attacks such as falsification of the state notification packet.

Even when the system state cannot be determined with only the operation amount and the observation amount, the attack detection device 200 according to the present embodiment can determine the system state by using the estimation.

In the present embodiment, each of the communication data processing unit 211, the observer unit 212, the attack determination unit 220, and the alarm unit 230 constitutes the attack detection device 200 as an independent functional block. However, the configuration of the attack detection device 200 is not limited to the above-described embodiment, and the any configuration may be adopted. Any functional block of the attack detection device 200 may be adopted as long as the functions described in the above embodiment can be realized. The attack detection device may be configured with any other combination or any block configuration of these functional blocks.

Further, the attack detection device may not be one device, but may be an attack detection system configured by a plurality of devices.

Although the first embodiment has been described, a plurality of parts in this embodiment may be combined and implemented. Alternatively, one part of this embodiment may be implemented. Besides, this embodiment may be implemented entirely or partially in any combination.

It is to be noted that the above-described embodiment is a preferable example in nature, and is not intended to limit the scope of the present invention, its application, and purpose, and various modified examples are possible as necessary.

### Reference Signs List

41: current system state, 42: system state before transitioning, 100: system configuration example, 101: information system network, 102, 600: control system network, 103: field network, 104: server device, 105: controller, 106: field device, 200: attack detection device, 206, 601: communication data, 207: system state information, 209: white list, 210: state estimation unit, 211: communication data processing unit, 212: observer unit, 220: attack determination unit, 221: determination result, 230: alarm unit, 231, 602: alarm, 240: storage unit, 241: state storage unit, 242: white list storage unit, 250: communication interface unit, 261: operation amount, 262: observation amount, 300: server device, 400, 500: equipment, 411: system state, 412: pre-transition state, 510: attack detection method, 520: attack detection program, 700: control system, 701: system information, 790: state transition pattern, 901: state transition white list, 902: communication data white list, 909: processing circuit, 910: processor, 920: storage device, 921: memory, 922: auxiliary storage device, 930: input interface, 940: output interface, 950: communication device, S10: attack determination process, S20: alarm process, S30: state estimation process, S100: attack detection process.

## Claims

1. An attack detection device (200) to detect an attack on a control system that transitions in a plurality of system states, the control system including equipment (400, 500) and a server device (104,300) to control the equipment, the attack detection device comprising:
a white list storage unit (242) to correlate and store, for each system state of the plurality of system states, a white list defining system information (701) that belongs to the control system and is permitted in the system state;
a state estimation unit (210) to acquire communication data (206) communicated between the server device and the equipment, which communication data (206) is collected by the attack detection device (200), the communication data (206) including an operation amount (261) transmitted from the server device (300) to the equipment (400, 500) and an observation amount (262) transmitted from the equipment (400, 500) to the server device (300), the state estimation unit (210) being configured to classify the communication data (206) into the operation amount (261) and the observation amount (262) and to estimate a current system state (41) of the control system from the operation amount (261) and the observation amount (262) included in the communication data (206); and
an attack determination unit (220) to acquire a white list corresponding to the current system state from the white list storage unit, and determine whether or not the attack has been detected based on the acquired white list and system information belonging to the control system in the current system state, by collating the collected communication data with the white list.

2. The attack detection device (200) according to claim 1, wherein
the white list storage unit (242)
correlates and stores as the white list, for each system state of the plurality of system states, a communication data white list (902) defining, as the system information (701), communication data permitted in the system state, and
the attack determination unit (220)
acquires a communication data white list corresponding to the current system state (41) from the white list storage unit, and determines that the attack has been detected when communication data acquired by the state estimation unit (210) does not match the acquired communication data white list.

3. The attack detection device (200) according to claim 1 or 2, further comprising
a state storage unit (241) to store the current system state (41) and a system state before transitioning (42) to the current system state, wherein
the white list storage unit (242)
correlates and stores as the white list, for each system state of the plurality of system states, a state transition white list (901) defining, as the system information (701), a pre-transition state (412) permitted as a system state before transitioning to the system state, and
the attack determination unit (220)
acquires a state transition white list corresponding to the current system state from the white list storage unit, and determines that the attack has been detected when a system state before transitioning to the current system state stored in the state storage unit does not match the acquired state transition white list.

4. The attack detection device (200) according to any one of claims 1 to 3, comprising
an alarm unit (230) to transmit an alarm to the server device (104,300) when it is determined by the attack determination unit (220) that the attack has been detected.

5. An attack detection method (510) of an attack detection device (200) to detect an attack on a control system that transitions in a plurality of system states, the control system including equipment (400,500) and a server device (104,300) to control the equipment, wherein
the attack detection device includes a white list storage unit (242) to correlate and store, for each system state of the plurality of system states, a white list defining system information (701) that belongs to the control system and is permitted in the system state,
the attack detection method comprising:
by a state estimation unit (210),
acquiring communication data (206) communicated between the server device and the equipment, the communication data (206) including an operation amount (261) transmitted from the server device (300) to the equipment (400, 500) and an observation amount (262) transmitted from the equipment (400, 500) to the server device (300),
classifying the communication data (206) into the operation amount (261) and the observation amount (262),
and estimating a current system state (41) of the control system from the operation amount (261) and the observation amount (262) included in the communication data (206); and by an attack determination unit (220), acquiring a white list corresponding to the current system state from the white list storage unit, and determining whether or not the attack has been detected based on the acquired white list and system information belonging to the control system in the current system state, by collating the collected communication data with the white list.

6. An attack detection program (520) of an attack detection device (200) to detect an attack on a control system that transitions in a plurality of system states, the control system including equipment (400,500) and a server device (104,300) to control the equipment, wherein
the attack detection device includes a white list storage unit (242) to correlate and store, for each system state of the plurality of system states, a white list defining system information (701) that belongs to the control system and is permitted in the system state,
the attack detection program causing the attack detection device as a computer to execute:
a state estimation process of acquiring communication data communicated between the server device and the equipment, the communication data (206) including an operation amount (261) transmitted from the server device (300) to the equipment (400, 500) and an observation amount (262) transmitted from the equipment (400, 500) to the server device (300), classifying the communication data (206) into the operation amount (261) and the observation amount (262), and estimating a current system state (41) of the control system from the operation amount (261) and the observation amount (262) included in the communication data (206); and
an attack determination process of acquiring a white list corresponding to the current system state from the white list storage unit, and determining whether or not the attack has been detected based on the acquired white list and system information belonging to the control system in the current system state, by collating the collected communication data with the white list.

## Patentansprüche

1. Angriffserfassungseinrichtung (200), um einen Angriff auf ein Steuersystem, das in eine Vielzahl von Systemzuständen übergeht, zu erfassen, wobei das Steuersystem Betriebseinrichtung (400, 500) und eine Servereinrichtung (104, 300), um die Betriebseinrichtung zu steuern, umfasst, wobei die Angriffserfassungseinrichtung umfasst:
eine Whitelist-Speichereinheit (242), um für jeden Systemzustand der Vielzahl von Systemzuständen eine White List, definierend Systeminformationen (701), die zu dem Steuersystem gehört und in dem Systemzustand zulässig ist, zu korrelieren und zu speichern;
eine Zustand-Ermittlungseinheit (210), um Kommunikationsdaten (206), die zwischen der Servereinrichtung und der Betriebseinrichtung kommuniziert werden, zu erwerben, wobei die Kommunikationsdaten (206) von der Angriffserfassungseinrichtung (200) gesammelt werden, wobei die Kommunikationsdaten (206) eine von der Servereinrichtung (300) an die Betriebseinrichtung (400, 500) übertragene Operationsgröße (261) und eine von der Betriebseinrichtung (400, 500) an die Servereinrichtung (300) übertragene Beobachtungsgröße (262) umfassen, wobei die Zustand-Ermittlungseinheit (210) eingerichtet ist, die Kommunikationsdaten (206) in die Operationsgröße (261) und die Beobachtungsgröße (262) zu klassifizieren und einen aktuellen Systemzustand (41) des Steuersystems aus der Operationsgröße (261) und der Beobachtungsgröße (262), die in den Kommunikationsdaten (206) enthalten sind, zu ermitteln; und
eine Angriffsbestimmungseinheit (220), um eine dem aktuellen Systemzustand entsprechende Whitelist aus der Whitelist-Speichereinheit zu erwerben und zu bestimmen, ob oder ob nicht der Angriff erfasst wurde auf Grundlage der erworbenen Whitelist und der zum Steuersystem im aktuellen Systemzustand gehörenden Systeminformationen, durch Kollationieren der gesammelten Kommunikationsdaten mit der Whitelist.

2. Angriffserfassungseinrichtung (200) nach Anspruch 1, wobei
die Whitelist-Speichereinheit (242)
als die Whitelist, für jeden Systemzustand der Vielzahl von Systemzuständen, eine Kommunikationsdaten-Whitelist (902), definierend, als die Systeminformationen (701), Kommunikationsdaten, die in dem Systemzustand zulässig sind, korreliert und speichert, und
die Angriffsbestimmungseinheit (220)
eine dem aktuellen Systemzustand (41) entsprechende Kommunikationsdaten-Whitelist, von der Whitelist-Speichereinheit erwirbt und bestimmt, dass der Angriff erfasst wurde, wenn die durch die Zustand-Ermittlungseinheit (210) erworbenen Kommunikationsdaten nicht mit der erworbenen Kommunikationsdaten-Whitelist übereinstimmen.

3. Angriffserfassungseinrichtung (200) nach Anspruch 1 oder 2, ferner umfassend:
eine Zustand-Speichereinheit (241), um den aktuellen Systemzustand (41) und einen Systemzustand vor dem Übergehen (42) in den aktuellen Systemzustand zu speichern, wobei
die Whitelist-Speichereinheit (242)
als die Whitelist, für jeden Systemzustand der Vielzahl von Systemzuständen, eine Zustandsübergang-White List (901), definierend, als die Systeminformation (701), einen Vor-Übergangs-Zustand (412), der als ein Systemzustand vor dem Übergehen in den Systemzustand zulässig ist, korreliert und speichert, und
die Angriffsbestimmungseinheit (220)
eine dem aktuellen Systemzustand entsprechende Zustandsübergang-Whitelist von der Whitelist-Speichereinheit erwirbt und bestimmt, dass der Angriff erfasst wurde, wenn ein Systemzustand vor dem Übergehen in den aktuellen Systemzustand, der in der Zustand-Speichereinheit gespeichert ist, nicht mit der erworbenen Zustandsübergang-Whitelist übereinstimmt.

4. Angriffserfassungseinrichtung (200) nach einem der Ansprüche 1 bis 3, umfassend:
eine Alarmeinheit (230), um einen Alarm an die Servereinrichtung (104, 300) zu übertragen, wenn durch die Angriffsbestimmungseinheit (220) bestimmt ist, dass der Angriff erfasst wurde.

5. Angriffserfassungsverfahren (510) einer Angriffserfassungseinrichtung (200), um einen Angriff auf ein Steuersystem, das in eine Vielzahl von Systemzuständen übergeht, zu erfassen, wobei das Steuersystem Betriebseinrichtung (400, 500) und eine Servereinrichtung (104, 300), um die Betriebseinrichtung zu steuern, umfasst, wobei
die Angriffserfassungseinrichtung eine Whitelist-Speichereinheit (242) aufweist, um für jeden Systemzustand der Vielzahl von Systemzuständen eine Whitelist, definierend Systeminformationen (701), die zu dem Steuersystem gehört und in dem Systemzustand zulässig ist, zu korrelieren und zu speichern,
wobei das Angriffserfassungsverfahren umfasst:
durch eine Zustand-Ermittlungseinheit (210),
Erwerben von Kommunikationsdaten (206), die zwischen der Servereinrichtung und der Betriebseinrichtung kommuniziert werden, wobei die Kommunikationsdaten (206) eine Operationsgröße (261), die von der Servereinrichtung (300) an die Betriebseinrichtung (400, 500) übertragen wird, und eine Beobachtungsgröße (262), die von der Betriebseinrichtung (400, 500) an die Servereinrichtung (300) übertragen wird, umfassen,
Klassifizieren der Kommunikationsdaten (206) in die Operationsgröße (261) und die Beobachtungsgröße (262),
und Ermitteln eines aktuellen Systemzustands (41) des Steuersystems aus der Operationsgröße (261) und der Beobachtungsgröße (262), die in den Kommunikationsdaten (206) enthalten sind; und
durch eine Angriffsbestimmungseinheit (220),
Erwerben einer dem aktuellen Systemzustand entsprechenden Whitelist aus der Whitelist-Speichereinheit und Bestimmen, ob oder ob nicht der Angriff erfasst wurde auf Grundlage der erworbenen Whitelist und der zum Steuersystem im aktuellen Systemzustand gehörenden Systeminformationen, durch Kollationieren der gesammelten Kommunikationsdaten mit der Whitelist.

6. Angriffserfassungsprogramm (520) einer Angriffserfassungseinrichtung (200), um einen Angriff auf ein Steuersystem, das in eine Vielzahl von Systemzuständen übergeht, zu erfassen, wobei das Steuersystem Betriebseinrichtung (400, 500) und eine Servereinrichtung (104, 300), um die Betriebseinrichtung zu steuern, umfasst, wobei
die Angriffserfassungseinrichtung eine Whitelist-Speichereinheit (242) aufweist, um für jeden Systemzustand der Vielzahl von Systemzuständen eine Whitelist, definierend Systeminformationen (701), die zu dem Steuersystem gehört und in dem Systemzustand zulässig ist, zu korrelieren und zu speichern,
wobei das Angriffserfassungsprogramm die Angriffserfassungseinrichtung als einen Computer dazu veranlasst, auszuführen:
einen Zustand-Ermittlungsprozess des Erwerbens von Kommunikationsdaten, die zwischen der Servereinrichtung und der Betriebseinrichtung kommuniziert werden, wobei die Kommunikationsdaten (206) eine von der Servereinrichtung (300) an die Betriebseinrichtung (400, 500) übertragene Operationsgröße (261) und eine von der Betriebseinrichtung (400, 500) an die Servereinrichtung (300) übertragene Beobachtungsgröße (262) umfassen, Klassifizierens der Kommunikationsdaten (206) in die Operationsgröße (261) und die Beobachtungsgröße (262) und Ermittelns eines aktuellen Systemzustands (41) des Steuersystems aus der Operationsgröße (261) und der Beobachtungsgröße (262), die in den Kommunikationsdaten (206) enthalten sind; und
einen Angriffsbestimmungsprozess des Erwerbens einer dem aktuellen Systemzustand entsprechenden Whitelist aus der Whitelist-Speichereinheit und Bestimmens, ob oder ob nicht der Angriff erfasst wurde auf Grundlage der erworbenen Whitelist und der zum Steuersystem im aktuellen Systemzustand gehörenden Systeminformationen, durch Kollationieren der gesammelten Kommunikationsdaten mit der Whitelist.

## Revendications

1. Dispositif de détection d'attaque (200) pour détecter une attaque sur un système de commande qui effectue une transition dans une pluralité d'états système, le système de commande incluant un équipement (400, 500) et un dispositif serveur (104, 300) pour commander l'équipement, le dispositif de détection d'attaque comprenant :
une unité de stockage de liste blanche (242) pour corréler et stocker, pour chaque état système de la pluralité d'états système, une liste blanche définissant des informations système (701) qui appartiennent au système de commande et sont autorisées dans l'état système ;
une unité d'estimation d'état (210) pour acquérir des données de communication (206) communiquées entre le dispositif serveur et l'équipement, lesquelles données de communication (206) sont collectées par le dispositif de détection d'attaque (200), les données de communication (206) incluant une quantité d'opération (261) transmise du dispositif serveur (300) à l'équipement (400, 500), et une quantité d'observation (262) transmise de l'équipement (400, 500) au dispositif serveur (300), l'unité d'estimation d'état (210) étant configurée de manière à classer les données de communication (206) en la quantité d'opération (261) et la quantité d'observation (262), et à estimer un état système en cours (41) du système de commande à partir de la quantité d'opération (261) et de la quantité d'observation (262) incluses dans les données de communication (206) ; et
une unité de détermination d'attaque (220) pour acquérir une liste blanche correspondant à l'état système en cours à partir de l'unité de stockage de liste blanche, et déterminer si l'attaque a été détectée ou non sur la base de la liste blanche acquise et d'informations système appartenant au système de commande dans l'état système en cours, en collationnant les données de communication collectées avec la liste blanche.

2. Dispositif de détection d'attaque (200) selon la revendication 1, dans lequel :
l'unité de stockage de liste blanche (242)
corrèle et stocke, en tant que la liste blanche, pour chaque état système de la pluralité d'états système, une liste blanche de données de communication (902) définissant, en tant que les informations système (701), des données de communication autorisées dans l'état système ; et
l'unité de détermination d'attaque (220)
acquiert une liste blanche de données de communication correspondant à l'état système en cours (41) à partir de l'unité de stockage de liste blanche, et détermine que l'attaque a été détectée lorsque des données de communication acquises par l'unité d'estimation d'état (210) ne correspondent pas à la liste blanche de données de communication acquise.

3. Dispositif de détection d'attaque (200) selon la revendication 1 ou 2, comprenant en outre
une unité de stockage d'états (241) pour stocker l'état système en cours (41) et un état système avant une transition (42) vers l'état système en cours, dans lequel
l'unité de stockage de liste blanche (242)
corrèle et stocke, en tant que la liste blanche, pour chaque état système de la pluralité d'états système, une liste blanche de transition d'état (901) définissant, en tant que les informations système (701), un état de pré-transition (412) autorisé en tant qu'un état système avant une transition vers l'état système ; et
l'unité de détermination d'attaque (220)
acquiert une liste blanche de transition d'état correspondant à l'état système en cours à partir de l'unité de stockage de liste blanche, et détermine que l'attaque a été détectée lorsqu'un état système avant une transition vers l'état système en cours stocké dans l'unité de stockage d'états ne correspond pas à la liste blanche de transition d'état acquise.

4. Dispositif de détection d'attaque (200) selon l'une quelconque des revendications 1 à 3, comprenant
une unité d'alarme (230) pour transmettre une alarme au dispositif serveur (104, 300), lorsqu'il est déterminé par l'unité de détermination d'attaque (220) que l'attaque a été détectée.

5. Procédé de détection d'attaque (510) d'un dispositif de détection d'attaque (200) pour détecter une attaque sur un système de commande qui effectue une transition dans une pluralité d'états système, le système de commande incluant un équipement (400, 500) et un dispositif serveur (104, 300) pour commander l'équipement, dans lequel
le dispositif de détection d'attaque inclut une unité de stockage de liste blanche (242) pour corréler et stocker, pour chaque état système de la pluralité d'états système, une liste blanche définissant des informations système (701) qui appartiennent au système de commande et sont autorisées dans l'état système ;
le procédé de détection d'attaque comprenant les étapes ci-dessous consistant à :
par le biais d'une unité d'estimation d'état (210),
acquérir des données de communication (206) communiquées entre le dispositif serveur et l'équipement, les données de communication (206) incluant une quantité d'opération (261) transmise du dispositif serveur (300) à l'équipement (400, 500) et une quantité d'observation (262) transmise de l'équipement (400, 500) au dispositif serveur (300),
classer les données de communication (206) en une quantité d'opération (261) et une quantité d'observation (262), et
estimer un état système en cours (41) du système de commande, à partir de la quantité d'opération (261) et de la quantité d'observation (262) incluses dans les données de communication (206) ; et
par le biais d'une unité de détermination d'attaque (220),
acquérir une liste blanche correspondant à l'état système en cours à partir de l'unité de stockage de liste blanche, et déterminer si l'attaque a été détectée ou non sur la base de la liste blanche acquise et d'informations système appartenant au système de commande dans l'état système en cours, en collationnant les données de communication collectées avec la liste blanche.

6. Programme de détection d'attaque (520) d'un dispositif de détection d'attaque (200) pour détecter une attaque sur un système de commande qui effectue une transition dans une pluralité d'états système, le système de commande incluant un équipement (400, 500) et un dispositif serveur (104, 300) pour commander l'équipement, dans lequel
le dispositif de détection d'attaque inclut une unité de stockage de liste blanche (242) pour corréler et stocker, pour chaque état système de la pluralité d'états système, une liste blanche définissant des informations système (701) qui appartiennent au système de commande et sont autorisées dans l'état système ;
le programme de détection d'attaque amenant le dispositif de détection d'attaque, en qualité d'ordinateur, à exécuter :
un processus d'estimation d'état consistant à acquérir des données de communication communiquées entre le dispositif serveur et l'équipement, les données de communication (206) incluant une quantité d'opération (261) transmise du dispositif serveur (300) à l'équipement (400, 500) et une quantité d'observation (262) transmise de l'équipement (400, 500) au dispositif serveur (300), à classer les données de communication (206) en la quantité d'opération (261) et la quantité d'observation (262), et à estimer un état système en cours (41) du système de commande à partir de la quantité d'opération (261) et de la quantité d'observation (262) incluses dans les données de communication (206) ; et
un processus de détermination d'attaque consistant à acquérir une liste blanche correspondant à l'état système en cours à partir de l'unité de stockage de liste blanche, et à déterminer si l'attaque a été détectée ou non sur la base de la liste blanche acquise et d'informations système appartenant au système de commande dans l'état système en cours, en collationnant les données de communication collectées avec la liste blanche.
